(19) Europäisches Patentamt / European Patent Office / Office européen des brevets

(11) **EP 3 576 267 A1**

(12) **EUROPEAN PATENT APPLICATION**

(43) Date of publication:
04.12.2019 Bulletin 2019/49

(51) Int Cl.:
*H02K 21/22* (2006.01)   *H02K 1/14* (2006.01)
*H02K 1/27* (2006.01)   *H02K 15/02* (2006.01)

(21) Application number: 18174826.0

(22) Date of filing: 29.05.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: **Technische Universität Graz**
**8010 Graz (AT)**

(72) Inventor: **Leitner, Stefan**
**8010 Graz (AT)**

(74) Representative: **Weiser & Voith**
**Patentanwälte Partnerschaft**
**Kopfgasse 7**
**1130 Wien (AT)**

(54) **BRUSHLESS DIRECT CURRENT MOTOR**

(57)    The invention relates to a brushless direct current motor (1), comprising a rotor (2) with an axial direction (AD) and a plurality of alternating magnetic poles disposed around the axial direction (AD), a stator (3) disposed coaxially to the rotor (2) and having a stator coil between a first and a second stator yoke (5, 6), each stator yoke (5, 6) having a stator base for mounting an end of the stator coil and, extending from the stator base, a plurality of stator claws whose end sections form stator poles (14 - 17), the stator poles (14, 15) of the first stator yoke (5) meshing with the stator poles (16, 17) of the second stator yoke (6) and forming gaps therebetween, wherein each stator pole (14 - 17) is slotted into at least two pole fingers (14a/b - 17a/b) and the pole fingers (14a/b - 17a/b) are skewed with respect to the axial direction (AD).

*Fig. 3*

EP 3 576 267 A1

**Description**

TECHNICAL FIELD

The present invention relates to a brushless direct current (BLDC) motor, comprising a rotor with an axial direction and a plurality of alternating magnetic poles disposed around the axial direction, a stator disposed coaxially to the rotor and having a stator coil between a first and a second stator yoke, wherein each stator yoke has a stator base for mounting an end of the stator coil and, extending from the stator base, a plurality of stator claws whose end sections form stator poles, and wherein the stator poles of the first stator yoke mesh with the stator poles of the second stator yoke and forming gaps therebetween.

BACKGROUND

A BLDC motor of this kind is known from, e.g., US 4 891 567 or US 2002/0117932 A1.

BLDC motors are electronically commutated synchronous machines with permanent magnets on the rotor. The name derives from the fact that they are characterized by a straight-line speed torque curve like that of their mechanically commutated counterparts, the permanent magnet direct current motors, see, e.g., W. H. Yeadon, A. W. Yeadon, Handbook of Small Electric Motors, New-York: McGraw-Hill, 2001. Depending on the application, there are numerous BLDC motor configurations of either inner or outer rotor type. Compared with inner-rotor motors, outer-rotor variants are usually easier to wind by using flyer winding technology instead of needle winders, have higher rotor inertia due to the increased air-gap diameter, have shorter end turns, and have more magnet material and in turn flux. Outer-rotor motors are usually employed for constant-speed applications in many industries, e.g., computer disk drives, cooling fans, and blowers, see, e.g., J.R. Hendershot, T.J.E. Miller, "Basic Design Choices in Design of Brushless Permanent-Magnet Machines", Florida, Motor Design Books LLC, 2010, ch. 3, sec. 3.5.12, pp. 107-108.

Due to cost reasons, mass-produced BLDC motors of sub-fractional horsepower are usually single-phase motors with a suboptimal slot/pole combination, resulting in very high inherent cogging torque. High cogging torque causes high output torque ripple, a rough running motor, and acoustic noise emissions.

BRIEF SUMMARY

It is an object of the invention to provide a novel BLDC motor with reduced cogging torque and total output torque ripple at low manufacturing costs.

This object is achieved with a BLDC motor, comprising:

a rotor with an axial direction and a plurality of alternating magnetic poles disposed around the axial direction,
a stator disposed coaxially to the rotor and having a stator coil between a first and a second stator yoke,
each stator yoke having a stator base for mounting an end of the stator coil and, extending from the stator base, a plurality of stator claws whose end sections form stator poles,
the stator poles of the first stator yoke meshing with the stator poles of the second stator yoke and forming gaps therebetween,
which BLDC motor is characterized in that each stator pole is slotted into at least two pole fingers and the pole fingers are skewed with respect to the axial direction.

By introducing auxiliary slots into the stator poles, the cogging torque fundamental frequency is at least doubled, thereby at least halving the optimal skewing angle, and the peak values are at least halved as well. Owing to the at least doubled cogging torque fundamental frequency, implementing stator claw skewing becomes surprisingly much more efficient and reduces the cogging torque peak values significantly. The combinatory effect of stator pole slotting and skewing thus leads to a BLDC motor with minimum cogging torque at nearly no additional manufacturing costs.

Preferably, the pole fingers are of equal width, seen in the circumferential direction of the stator. In case of two pole fingers per stator pole, the slot dividing the stator pole into the two pole fingers is thus in the middle of the stator pole, with respect to the circumferential direction of the stator.

In a preferred embodiment of the invention the skewing angle of the pole fingers is in the range of 15° to 60°, preferably about 45° (in mechanical degrees). These relatively low amounts of skewing can be readily manufactured while are perfectly sufficient to achieve the desired anti-cogging effect in combination with the pole slotting.

To make the residual cogging torque waveform as uniform as possible, it is further preferred that the width of all slots and gaps is the same.

In a first variant of the invention, the length of each slot is equal to the axial length of the respective stator claw. In this way, the stator poles are slotted into said pole fingers over the entire axial length of the stator yoke as exposed on the circumference of the stator. This maximizes the anti-cogging effect of the slotting. However, as the slots do cause a slight decrease in the total magnetic flux per stator pole, a compromise between anti-cogging and flux maximisation may be desirable. To this end, in an alternative second variant of the invention, the length of each slot may be somewhat shorter than the axial length of the respective stator claw.

To increase the mechanical stability of the slotted and skewed stator poles, according to another preferred feature of the invention adjacent pole fingers of the same stator pole are connected via a bridge. Preferably, the bridge lies at the end of the pole fingers to minimize its influence on the anti-cogging effect of the skewed slots.

The inventive claw pole structure is particularly useful for low-cost mass product BLDC motors where there are usually only two stator claws per stator yoke. Preferably there are also only two pole fingers per stator pole, to minimize flux loss caused by the slots and to double the cogging torque fundamental frequency. However, other numbers of stator claws per stator yoke and pole fingers per stator pole are possible, e.g., six or eight pole BLDC motors with three or more fingers per pole.

For mass production, it is particularly useful when each stator yoke has been made by punching and bending or deep-drawing a metal plate or a laminated stack of metal sheets. Alternatively, the stator yokes could also be sintered, preferably from a soft magnetic composite (SMC) material.

BRIEF DESCRIPTION OF THE DRAWINGS

The invention will now be described by means of exemplary embodiments thereof under reference to the enclosed drawings, in which:

Fig. 1a is a schematic and exploded perspective view of a BLDC motor according to the state of the art;
Fig. 1b is a circuit diagram of an inverter circuit for the motor of Fig. 1a;
Figs. 2a - 2c are steel sheet layouts for the punching and subsequent deep-drawing of a conventional stator (Fig. 2a), a slotted stator (Fig. 2b), and a stator for a BLDC motor according to the invention (Fig. 2c), respectively;
Fig. 3 is a schematic and exploded perspective view of a BLDC motor according to the invention;
Fig. 4a is a perspective view of one of the stator yokes of the BLDC motor of Fig. 3;
Figs. 4b - 4d are perspective views of further embodiments of stator yokes for the motor of Fig. 3.
Fig. 5 is a diagram of the cogging torque waveforms of the BLDC motors when manufactured according to Figs. 2a, 2b, and 2c, respectively;
Fig. 6 is a diagram of the cogging torque harmonic order analysis of the BLDC motors when manufactured according to Figs. 2a, 2b, and 2c, respectively;
Fig. 7 is a diagram of the back-EMF waveforms of the BLDC motors when manufactured according to Figs. 2a, 2b, and 2c, respectively, and implemented with a bifilar winding;
Fig. 8 is a diagram of the phase current waveforms of the BLDC motors when manufactured according to Figs. 2a, 2b, and 2c, respectively, and implemented with a bifilar winding; and
Fig. 9 is a diagram of the total output torque waveforms of the BLDC motors when manufactured according to Figs. 2a, 2b, and 2c, respectively, and implemented with a bifilar winding.

DETAILED DESCRIPTION

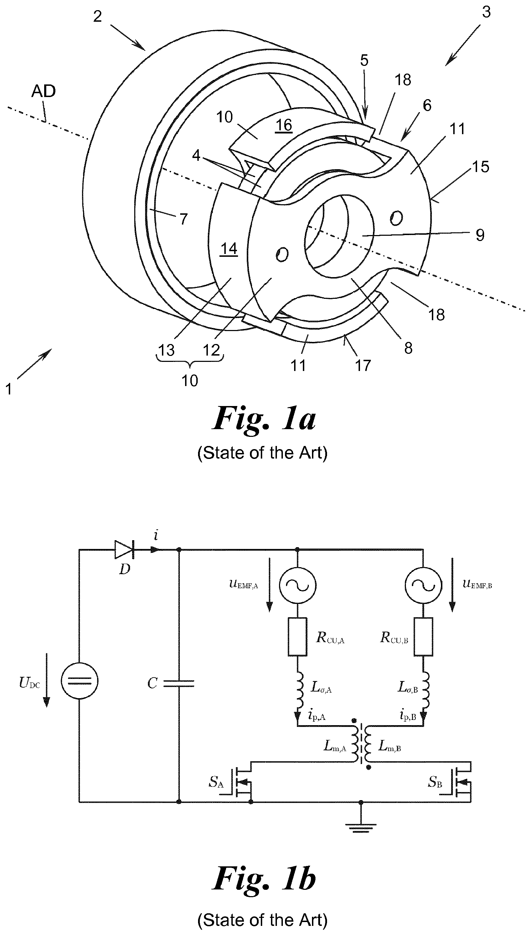

In the embodiment of Fig. 1a a claw-pole brushless direct current (BLDC) motor 1 comprises an outer 4-pole permanent magnet (PM) rotor 2 and an inner claw-pole stator 3 with a concentrated single-phase bifilar field winding coil 4 between two claw-pole stator yokes 5, 6. The ring- or cup-shaped rotor 2 has permanent magnets 7 attached to its inner surface in an alternatingly oriented fashion. The magnets 7 thus form a plurality of alternating magnetic poles (here: four poles N-S-N-S) around the axial direction AD of the rotor 2 and stator 3. The coil 4 can also be a unifilar winding.

Each of the stator yokes 5, 6 is made of a ferromagnetic material and has a stator base 8 with a hollow or solid cylindrical section 9 reaching into one end of the coil 4 and a plurality of (here: two) stator claws 10, 11. The stator claws 10, 11 each have a first, radially extending section 12 and - approximately perpendicularly thereto - a second or end section 13 extending substantially parallel to the axial direction AD all along the outer side of the coil 4. The end sections 13 of all stator claws 10, 11 thus form four stator poles 14 - 17 (here: four poles N-S-N-S).

In all embodiments disclosed herein, the rotor 2 could also be an inner rotor with the magnets 7 attached to its outer surface and the stator 3 could be an outer stator of which at least the stator poles 14 - 17 surround the rotor 2.

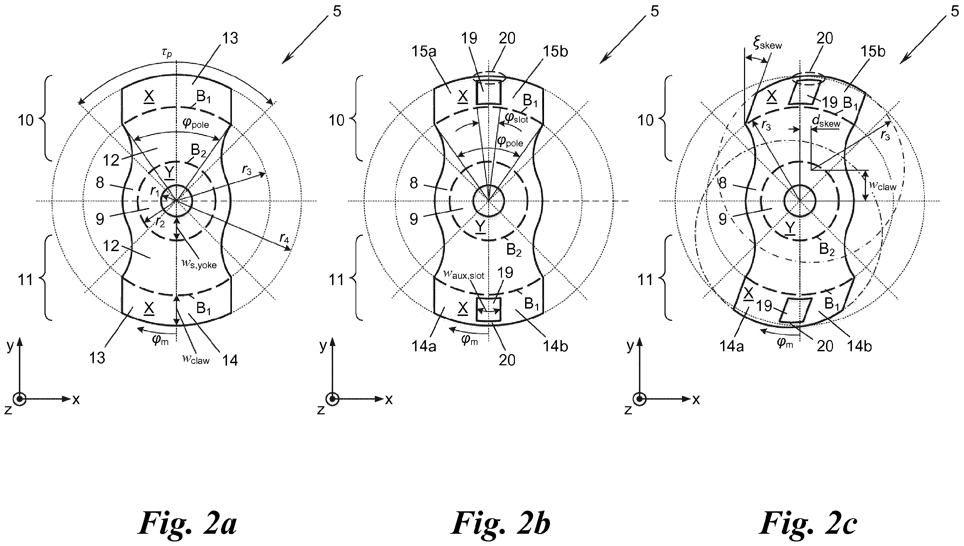

As can be seen from the punching and bending or deep-drawing layouts of Figs. 2a - 2c for metal blanks from which the stator yokes 5, 6 are manufactured, the stator claws 10, 11 of the stator yokes 5, 6 can be formed by bending or deep-drawing outer parts X of the blank into the end sections 13 along bending lines $B_1$, starting from a substantially flat blank. In the same way, the cylindrical section 9 of the stator yokes 5, 6 can be formed from the same flat blank by, e.g., deep-drawing a central part Y of the blank along bending line $B_2$.

Alternatively, the stator yokes 5,6 could be sintered into their final shape from a ferromagnetic powder material, e.g., from a soft magnetic composite (SMC) material.

The two stator yokes 5, 6 are put together in a complimentary opposed configuration so that their cylindrical sections 9 face each other and the stator poles 14, 15 of one stator yoke 5 mesh with the stator poles 16, 17 of the other stator yoke 6, forming gaps 18 therebetween, when seen in the circumferential direction of the stator 3.

Fig. 1b shows an example of an inverter circuit for the BLDC motor 1 of Fig. 1a with a bifilar winding coil 4, where $C$ is a DC-link capacitor and a diode $D$ prevents current from flowing back into a source $U_{DC}$. Depending on the position of the rotor 2, as sensed by a Hall effect sensor (not shown), the coil 4 (where the phases A and B of the bifilar winding are modeled by $u_{EMF}$, $R_{CU}$, $L_\sigma$, and $L_m$) is alternatingly energized by use of power electronic switches $S_A$ and $S_B$, respectively, driving flux through the stator yokes 5, 6, creating four magnetic poles (N-S-N-S) along the circumference of the stator 3.

If other coils 4 are used, e.g., a unifilar winding coil 4, the inverter circuit would be adapted accordingly. As explained at the outset, the motor 1 depicted in Fig. 1a suffers from high cogging torque due to its unfortunate slot/pole combination $Q/2p = 4/4$.

To overcome this problem, as shown in Figs. 2b, 2c, 3, and 4a - 4d each stator pole 14 - 17 is slotted into two (or more) pole fingers 14a, 14b; 15a, 15b; 16a, 16b; and 17a, 17b, respectively, i.e., a slot 19 is provided in each stator pole 14 - 17 to divide the stator pole 14 - 17 into the pole fingers 14a/b - 17a/b. The width $w_{aux,slot}$ of the slots 19 is preferably - but not necessarily - the same as the width of the gaps 18, as seen in the circumferential direction of the stator 3.

The slots 19 divide each stator pole 14 - 17 into pole fingers 14a/b - 17a/b of equal width (seen in the circumferential direction of the stator 3). This means that in case of two pole fingers 14a/b - 17a/b per stator pole 14 - 17 each slot 19 lies in the middle (with respect to the circumferential direction of the stator) of the respective stator pole 14 - 17. When there are more than two pole fingers 14a/b - 17a/b per stator pole 14 - 17 and thus there is more than one slot 19 per stator pole 14 - 17, the slots 19 are preferably all of equal width and distributed regularly along the circumference of the respective stator pole 14 - 17.

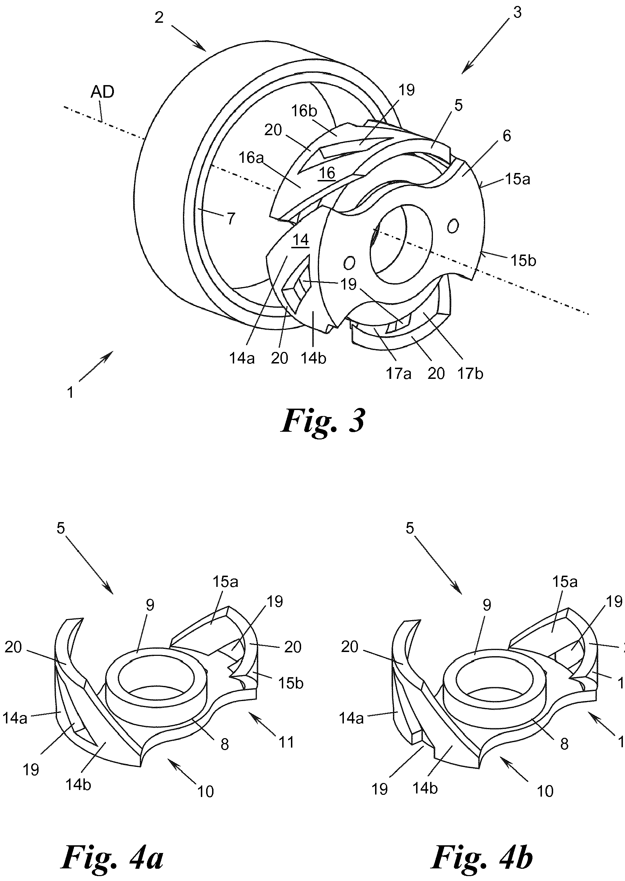

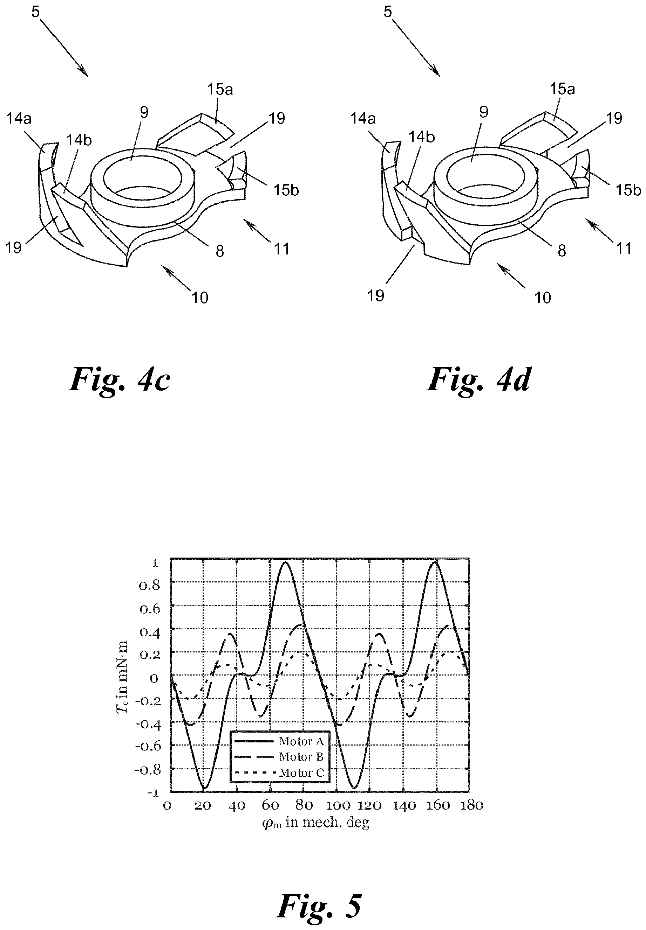

The axial length of the slots 19 may be equal to the entire axial length of the respective stator claw 10, 11, as shown in the embodiments of Fig. 4d or be somewhat shorter, as shown in the embodiments of Figs. 3, 4a, 4b, and 4c.

The slots 19 of the same stator pole 14 - 17 may be bridged, i.e., the pole fingers 14a/b - 17a/b of the same stator pole 14 - 17 may be connected, via a bridge 20 for stability reasons. The bridge 20 is explicitly shown in the embodiments of Figs. 2b, 2c, 3, 4a, and 4b, while omitted in the embodiments of Figs. 4c and 4d. The bridge 20 may be at any point along the axial extension of the slot 19, however, preferably the bridge 20 lies at the end of the stator poles 14 - 17. The bridge 20 can be unitarily formed with the pole fingers 14a/b - 17a/b, e.g., by punching a hole into the sheet blanks (see Figs. 2b, 2c) to form the slot 19 and the bridge 20 in one step.

To minimize cogging torque, in combination with this slotting of the stator poles 14 - 17 the stator poles are skewed with respect to the axial direction AD under a skewing angle $\xi_{skew}$, as is shown in the embodiments of Figs. 2c, 3, 4a - 4d. The slots 19 are made under the same skewing angle $\xi_{skew}$. The pole fingers 14a/b - 17a/b are thus skewed in the same way with respect to the axial direction AD.

It will be shown in the following that the slotting of the stator poles 14 - 17 by means of the slots 19 makes the anti-cogging effect of the skewing of the stator poles 14 - 17 surprisingly much more effective, so that the combination of slotting and skewing significantly reduces cogging torque and thus total output torque ripple of the motor 1.

In general, the cogging torque waveform $T_c$ can be described as a Fourier series without the zero component, see N. Bianchi, S. Bolognani, "Design techniques for reducing the cogging torque in surface-mounted PM motors", IEEE Trans. Ind. Appl., vol. 38, no. 5, pp. 1259-1265, Sep./Oct. 2002:

$$T_{\mathrm{c}}(\varphi_{\mathrm{m}}) = \sum_{k=1}^{\infty} T_k \sin(kQ\varphi_{\mathrm{m}} + \varphi_k) \qquad \text{eq. (1)}$$

where $k$ is the order of the cogging torque harmonics, $T_k$ and $\varphi_k$ are the amplitude and phase of the $k$th harmonic component, $\varphi_{\mathrm{m}}$ is the mechanical angle, and $Q$ is the number of slots.

A small goodness factor $C_T$, which is defined in eq. (2), indicates a slot/pole combination with low inherent cogging torque, as taught in Z. Q. Zhu D. Howe, "Influence of design parameters on cogging torque in permanent magnet machines", IEEE Trans. Energy Convers., vol. 15, no. 4, pp. 407-412, Dec. 2000. For the studied low-cost single-phase motor topology ($2p = 4$ poles and $Q = 4$ slots), the goodness factor is in fact very high and undesirable (LMC denotes the *least common multiple* of two integers):

$$C_\mathrm{T} = \frac{2pQ}{\mathrm{LCM}(2p, Q)} = \frac{4 \cdot 4}{\mathrm{LCM}(4, 4)} = \frac{16}{4} = 4 \qquad \text{eq. (2)}$$

indicating large inherent cogging torque, calling for cogging torque minimization measures.

*Implementation of Stator Claw Skewing*

This subsection discusses skewing as a cogging torque minimization method and its application to the motor 1. In general, skewing acts as an averaging filter and changes the generic description of the cogging torque waveform in eq. (1) to the following:

$$T_\mathrm{c,skew}(\varphi_\mathrm{m}) = \frac{1}{\xi_\mathrm{skew}} \sum_{k=1}^{\infty} \int_0^{\xi_\mathrm{skew}} T_k \sin(kN_\mathrm{p}Q\varphi_\mathrm{m} + \varphi_k) d\varphi_\mathrm{m} \qquad \text{eq. (3)}$$

where, in addition to the parameters defined in the context of eq. (1), $\xi_\mathrm{skew}$ is the skewing angle and $N_\mathrm{p}$ is the number of cogging torque periods during a slot pitch rotation, see N. Bianchi, S. Bolognani, "Design techniques for reducing the cogging torque in surface-mounted PM motors", IEEE Trans. Ind. Appl., vol. 38, no. 5, pp. 1259-1265, Sep./Oct. 2002.
To completely eliminate the cogging torque requires to skew by the mechanical angle $\xi_\mathrm{skew,opt}$ equal to the spatial period of the cogging torque $\lambda_\mathrm{c}$. However, due to the undesirable slot/pole combination of the motor depicted in Fig. 1a its optimal skewing angle $\xi_\mathrm{skew,opt}$ would be very large:

$$\xi_\mathrm{skew,opt} = \lambda_\mathrm{c} = \frac{360°}{\mathrm{LCM}(2p, Q)} = \frac{360°}{\mathrm{LCM}(4, 4)} = \frac{360°}{4} = 90° \qquad \text{eq. (4)}$$

which is impractical for manufacturing for the given aspect ratio of the motor. In the following it is shown that by the selected implementation of stator pole slotting and skewing the cogging torque peaks can be reduced by about 80 % even with a low skewing angle $\xi_\mathrm{skew}$ of 15° to 60°, e.g., 45°.

*Implementation of Auxiliary Slots and Stator Claw Skewing*

In this subsection, it is shown how the introduction of "auxiliary" slots 19 can double the cogging torque's fundamental frequency, making skewing much more effective, and halve its peaks. By introducing the slots 19, additional phase-shifted cogging torque waveforms $T_\mathrm{c,aux}$ are created, resulting from the interaction of the permanent magnets 7 with the new artificial slots 19 (see N. Bianchi, S. Bolognani, "Design techniques for reducing the cogging torque in surface-mounted PM motors", IEEE Trans. Ind. Appl., vol. 38, no. 5, pp. 1259-1265, Sep./Oct. 2002):

$$T_\mathrm{c,aux}(\varphi_\mathrm{m}) = \sum_{k=1}^{\infty} T_k \sin\left(kQ\left[\varphi_\mathrm{m} + \frac{2\pi}{Q(N_\mathrm{n}+1)}\right] + \varphi_k\right) \qquad \text{eq. (5)}$$

where $N_\mathrm{n}$ is for this motor 1 the number of auxiliary slots 19 per stator pole 14 - 17. The total cogging torque is then the superposition of eq. (1) and eq. (5):

$$T_\mathrm{c,tot}(\varphi_\mathrm{m}) = T_\mathrm{c}(\varphi_\mathrm{m}) + T_\mathrm{c,aux}(\varphi_\mathrm{m}) \qquad \text{eq. (6)}$$

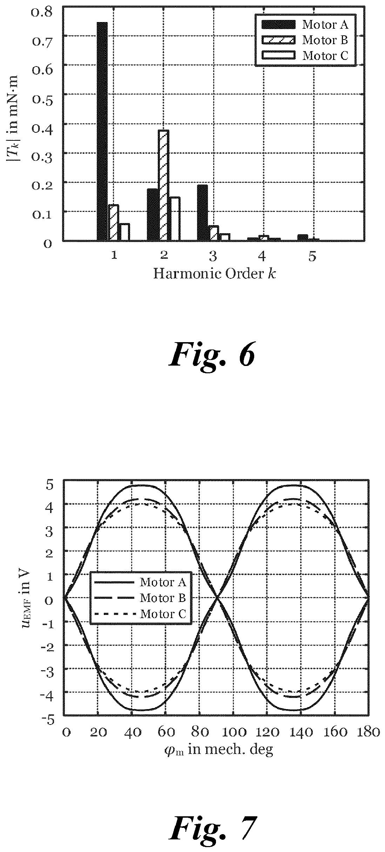

As shown in eq. (7), with $Q = 4$ and one auxiliary slot 19 per pole 14 - 17 ($N_\mathrm{n} = 1$), the fundamental component (which shows by far the largest amplitude, see, e.g., 1st harmonic component of Motor A in Fig. 6) and all other odd components of the cogging torque ($T_3$, $T_5$, ...) are theoretically eliminated, while essentially the even order harmonics (which have considerably smaller amplitudes, see, e.g., 2nd and 4th harmonics of Motor A in Fig. 6) add up:

$$T_{c,tot}(\varphi_m) = \sum_{k=1}^{\infty} T_k \sin(k4\varphi_m + \varphi_k) + T_k \sin\left(k4\left[\varphi_m + \frac{\pi}{3}\right] + \varphi_k\right)$$

$$= \underbrace{T_1 \sin(4\varphi_m + \varphi_1) + T_1 \sin(4\varphi_m + \pi + \varphi_1)}_{=0} + T_2 \sin(8\varphi_m + \varphi_2) + T_2 \sin(8\varphi_m + 2\pi + \varphi_2) +$$

$$\underbrace{T_3 \sin(12\varphi_m + \varphi_3) + T_3 \sin(12\varphi_m + 3\pi + \varphi_3)}_{=0} + T_4 \sin(16\varphi_m + \varphi_4) + T_4 \sin(16\varphi_m + 4\pi + \varphi_4) +$$

$$\underbrace{T_5 \sin(20\varphi_m + \varphi_5) + T_5 \sin(20\varphi_m + 5\pi + \varphi_5)}_{=0} + T_6 \sin(24\varphi_m + \varphi_6) + T_6 \sin(24\varphi_m + 6\pi + \varphi_6) + \ldots$$

$$\text{eq. (7)}$$

Total cancellation of the odd harmonics cannot be achieved as, especially for this motor topology, the auxiliary slot is not identical with the actual slot and the coefficients $T_k$ and $\varphi_k$ in eq. (1) and eq. (5) are not the same. However, at large, the fundamental frequency of the cogging torque doubles and the new cogging torque spatial period $\lambda_c^*$ in mech. degrees reduces, due to the increase in the number of slots ($Q^* = 8$), to

$$\lambda_c^* = \frac{360°}{\text{LCM}(2p, Q^*)} = \frac{360°}{\text{LCM}(4,8)} = \frac{360°}{8} = 45° = \frac{\pi}{4} \qquad \text{eq. (8)}$$

As a result, the optimal skewing angle is also halved $\left(\xi_{skew,opt}^* = \lambda_c^* = \frac{\xi_{skew,opt}}{2} = \frac{\lambda_c}{2}\right)$, compared to the design where only skewing and no auxiliary slots are considered, see eq. (4). Hence, it can be concluded that introducing the auxiliary slots 19 modulates the permeance variation and facilitates the effectiveness of skewing to a large extent. Introducing a number of auxiliary slots 19 other than $N_n = 1$ (i.e., $N_n = 2, 3, 4, \ldots$) is possible, however, does not eliminate the fundamental component of the cogging torque entirely. Other slot/pole combinations, may the stator 1 be of inner or outer stator type, may require a different number of auxiliary slots 19.

As the next step, using eq. (3), skewing is applied to eq. (6), where $T_{c,tot}(\varphi_m)$ is represented as a new Fourier series. Theoretically, a skewing angle $\xi_{skew,opt}^* = \frac{\pi}{4}$ completely eliminates the cogging torque $T_{c,skew}$:

$$T_{c,skew} = \frac{1}{\xi_{skew,opt}^*} \sum_{k=1}^{\infty} \int_0^{\xi_{skew,opt}^*} T_{c,tot}(\varphi_m) d\varphi_m$$

$$= \frac{1}{\xi_{skew,opt}^*} \sum_{k=1}^{\infty} \int_0^{\xi_{skew,opt}^*} T_k \sin(kN_pQ^*\varphi_m + \varphi_k) d\varphi_m$$

$$= \frac{1}{\xi_{skew,opt}^*} \sum_{k=1}^{\infty} \frac{T_k}{kN_pQ^*}[-\cos(kN_pQ^*\xi_{skew,opt}^* + \varphi_k) + \cos(\varphi_k)] \qquad \text{eq. (9)}$$

which yields for $\xi_{skew,opt}^* = \frac{\pi}{4}$, $N_p = 1$, and $Q^* = 8$

$$T_{c,skew} = \frac{4}{\pi} \sum_{k=1}^{\infty} \frac{T_k}{k8}\left[-\cos\left(k8\frac{\pi}{4} + \varphi_k\right) + \cos(\varphi_k)\right] = 0$$

$$\text{eq. (10)}$$

A special punching layout is disclosed in the following showing how the cogging torque minimization measures proposed (auxiliary slots and stator claw skewing) can be considered at the stage of punching the steel sheets and subsequent deep-drawing thereof for the claw-pole stator yokes with no increase in manufacturing cost. Figs. 2a - 2c show the major three stator topologies elaborated upon herein:

- Motor A (conventional, Fig. 2a);
- Motor B (auxiliary slots, Fig. 2b); and
- Motor C (auxiliary slots and skewing, Fig. 2c).

Fig. 2a shows the conventional steel sheet punching layout (Motor A) where the outer areas X are to be deep-drawn into the positive or negative z-direction to form the end sections 13 and the central area Y is to be deep-drawn into the same z-direction to form the cylindrical section 9. The parameters $r_2$ and $r_3$ are the inner and outer radii of the final stator yoke 5, 6; $r_1$ and $r_4$ determine the lengths of the deep-drawn parts in z-direction; the stator pole length $w_{claw}$ is $r_4$ - $r_3$; the stator yoke length $w_{s,yoke}$ is $r_2$ - $r_1$; $\tau_p$ is the pole pitch, and $\varphi_{pole}$ is the pole angle. The parameter $\varphi_m$ represents the circumferential angle in mechanical degrees. The steel sheet thickness d of the blank in z-direction is not shown in Figs. 2a - 2c. Depending on radius $r_2$ and the desired axial length of the motor determined by $r_2$ - $r_1$, it can be necessary to realize the stator yoke 5, 6 utilizing a bushing, which may be pulled over a slide bearing, to fasten the stator yokes 5, 6 to the coil 4.

Fig. 2b shows how to include the auxiliary slots 19 in the punching layout (Motor B). Preferably, the width $w_{aux,slot}$ of the auxiliary slots 19 shown in Fig. 2b is the same as that of the gaps 18 and can be determined for this motor topology from the pole pitch $\tau_p$, the pole angle $\varphi_{pole}$, and the radius $r_3$ as follows:

$$\tau_p = \frac{360°}{2p} \qquad\qquad \text{eq. (11)}$$

$$\varphi_{slot} = \tau_p - \varphi_{pole} \qquad\qquad \text{eq. (12)}$$

$$w_{aux,slot} = r_3\,\varphi_{slot}\,\frac{2\pi}{360°} \qquad\qquad . (13)$$

Depending on the motor rating and in turn the dimensions of the stator yokes 5, 6 (especially pole length $w_{claw}$), the bridge 20, indicated in Fig. 2b, can enhance the mechanical stability and thereby avoid claw deformation during the bending or deep-drawing process.

Fig. 2c shows how stator pole skewing can be included into the punching layout (Motor C) based on the design shown in Fig. 2b, where the horizontal displacement $d_{skew}$ can be calculated from the desired skewing angle $\xi_{skew}$ and the pole length $w_{claw}$:

$$d_{skew} = w_{claw}\tan(\xi_{skew}) \qquad\qquad (14)$$

Obviously, there is a maximum skewing angle due to practical limitations of the bending or deep-drawing process. The maximum skewing angle depends on the stator pole length $w_{claw}$ and the steel sheet thickness d.

SIMULATION RESULTS

This section verifies the design improvements described above, i.e., the effects of the auxiliary slots 19 and the stator pole skewing on the cogging torque waveform in the no-load condition. Then, the studied motors are operated under load condition to determine the average total output torque as well as its ripple. As an accurate determination of the entire cogging torque waveform can be made with the finite element method (see, e.g., J.R. Hendershot, T.J.E. Miller, "Basic Design Choices in Design of Brushless Permanent-Magnet Machines", Florida, Motor Design Books LLC, 2010, ch. 3, sec. 3.5.12, pp. 107-108) and dynamic torque in sub-fractional hp motors is hardly measurable, finite element (FE) simulations with JMAG® from JSOL Corporation (see "Simulation Technology for Electromagnetical Design", http://www.jmag-international.com/, accessed on 27-01-2018) are utilized to determine advantageous stator claw designs for minimum cogging torque and total output torque ripple. Allowing for confidence into the simulated results, the FE modeling technique has been successfully verified through experiments. The system parameters are listed in Table I:

Table I

| Parameter | Value | Parameter | Value |
| --- | --- | --- | --- |
| $U_{DC}$ | 8 V | $B_r$ | 0.42 T |
| $R_{CU,A}, R_{CU,B}$ | 16.4 Ω | $N_A$, $N_B$ | 208 |
| $r_2$ | 3mm | $r_3$ | 8 mm |
| $\omega_{s,yoke}$ | 2.9 mm | $\omega_{claw}$ | 4.5 mm |
| $r$ | 11 mm | $\varphi_{pole}$ | 72° |
| $d$ | 1 mm | $n$ | 5500 rpm |

In the following it is shown how the cogging torque of the conventional claw-pole motor, depicted in Fig. 1a, can be reduced drastically by introducing the auxiliary slots 19 and skewing the stator pole by $\xi_{skew}$. Introducing the slots 19 significantly improves the skewing by $\xi_{skew}$. Figs. 4a - d show various variants of the proposed low cogging torque claw-pole stator configuration with auxiliary slots and stator claw skewing, with bridge 20 (Figs. 4a, 4b) or without bridge 20 (Figs. 4c, 4d), and with a slot length shorter than the axial length of the stator (Figs. 4a, 4b, 4c) or with a slot length equal to the axial length of the stator (Fig. 4d).

*No-Load Condition*

This subsection considers the operation of Motors A - C under no-load, i.e., zero-current, condition. Investigated are the effects of the proposed improvement measures (auxiliary slots and stator claw skewing) on both the cogging torque and back-EMF waveforms.

Fig. 5 shows the cogging torque waveform of Motor A of the conventional design as shown in Figs. 1a and 2a in comparison with those of Motor B with slotted but straight (not skewed) stator poles as shown in Fig. 2b and those of Motor C with slotted and skewed stator poles as shown in Figs. 2c and 3. With one auxiliary slot 19 per stator pole 14 - 17, the peak values of the cogging torque in Motor B are reduced by more than 50 % (from 0.985 mN·m in Motor A to 0.425 mN·m), and the fundamental frequency of the cogging torque is essentially doubled. In Motor C, implementing stator claw skewing of $\xi_{skew}$ = 45° further reduces the peaks of the cogging torque waveform by an additional 50 % (from 0.425 mN·m in Motor B to 0.2 mN·m). Altogether, with the proposed measures, the total cogging torque peaks are reduced by up to 80 %, as compared to Motor A.

Fig. 6 shows an order analysis of the cogging torque waveforms shown in Fig. 5. As predicted in eq. (7), the fundamental and third order harmonic components are almost canceled (reduced by 84 % and 74 %, respectively) when slots 19 are introduced (Motor B), while the second order harmonic component $T_2$ doubles. When skewing ($\xi_{skew}$) is applied in addition to the slots 19 (Motor C), all harmonic components are further reduced significantly. As can be seen, the cogging torque of the claw-pole motor topology can be minimized successfully.

Fig. 7 shows the back-EMF waveforms of Motors A - C. Compared with Motor A, the auxiliary slots 19 in Motor B cause a decrease in the back-EMF peak value of 11.88 % because, as iron is removed from the poles 14 - 17, the main flux per pole 14 - 17 is reduced. The stator claw skewing of 45°, implemented on Motor C, causes a total decrease in back-EMF peak value of 16.57 % compared with Motor A. Notice that the induced back-EMF in case of Motors B and C shows an increased slope.

It can be concluded that the cogging torque reduction is counteracted by a decrease in back-EMF peak value. When no measure is taken, the phase current will increase for constant supply voltage. This can be compensated for, e.g., by increasing the number of turns of the coil 4 which, however, decreases the wire size and increases the resistance of the winding.

*Load Condition*

This subsection addresses the operation of Motors A - C under load condition. Investigated are the phase current, the average total output torque, and its ripple. In order to deliver sufficient starting torque and avoid zero output torque positions, Motors A - C can be implemented with asymmetric air-gaps between the stator and the rotor, e.g., with an air-gap asymmetry $\Delta\delta$ of 0.145 mm.

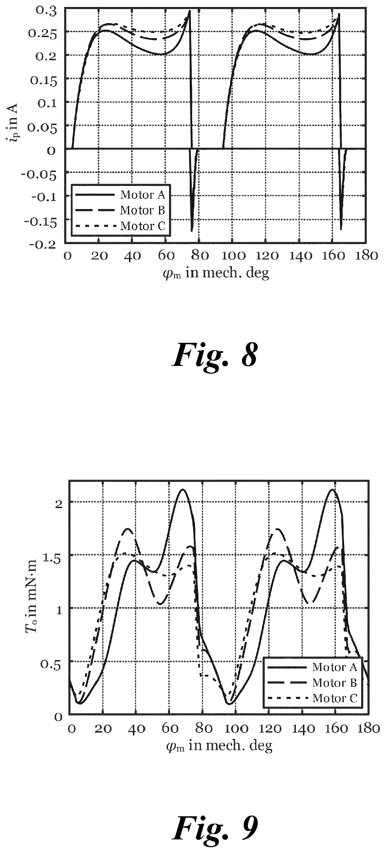

Fig. 8 shows the phase current waveforms of Motors A - C for block commutation. When one phase is switched off, due to the very good coupling of the bifilar winding, the stored magnetic energy is dissipated as a free-wheeling current in the other phase and can be identified as negative current peaks. The respective rms phase current values are as follows: Motors A ($I_p$ = 194.6 mA), Motor B ($I_p$ = 210.7 mA), and Motor C ($I_p$ = 216.1 mA). Because of the decrease in back-EMF displayed in Fig. 7, Motors B and C show for constant supply voltage slight increases in the drawn rms phase currents of 7.68 % and 9.95 % compared with Motor A. Advantageously, in case of Motors B and C, the desired rectangular shape of the phase current waveform is more pronounced.

When there is no iron saturation, the total output torque is the superposition of the cogging torque and the alignment torque:

$$T_{\mathrm{o}} = T_{\mathrm{c,tot}} + \frac{u_{\mathrm{EMF,A}} i_{\mathrm{A}} + u_{\mathrm{EMF,B}} i_{\mathrm{B}}}{\omega} \qquad \text{eq. (15)}$$

Fig. 9 shows the total output torque waveforms of Motors A - C with the output torque ripple, defined as $T_{\mathrm{rip}} = T_{\mathrm{o,max}} - T_{\mathrm{o,min}}$. The following output torque ripples are identified: Motor A ($T_{\mathrm{rip,A}}$ = 2.015 mN·m), Motor B ($T_{\mathrm{rip,B}}$ = 1.64 mN·m), and Motor C ($T_{\mathrm{rip,C}}$ = 1.35 mN·m). As can be seen, the introduction of auxiliary slots 19 in Motor B yields a reduction in output torque ripple of 18.8 %. Motor C, which features auxiliary slots 19 and stator claw skewing by $\xi_{\mathrm{skew}}$, shows a reduction in output torque ripple of 32.9 %. As is shown in Table II, the average output torque $\overline{T}_{\mathrm{o}}$ experiences a marginal decrease when the cogging torque reduction methods are implemented (Motor B: $\Delta T_{\mathrm{o}}$ = 0.3 %; Motor C: $\Delta T_{\mathrm{o}}$ = 1.9 %):

Table II

| Motor | $T_{\mathrm{o,min}}$ mN·m | $T_{\mathrm{o,max}}$ mN·m | $T_{\mathrm{rip}}$ mN·m | $\Delta T_{\mathrm{rip}}$ % | $\overline{T}_{\mathrm{o}}$ mN·m | $\Delta \overline{T}_{\mathrm{o}}$ % |
|-------|------|------|------|------|------|------|
| A | 0.100 | 2.12 | 2.02 | 0 | 1.037 | 0 |
| B | 0.108 | 1.74 | 1.64 | 18.8 | 1.034 | 0.3 |
| C | 0.163 | 1.52 | 1.35 | 32.9 | 1.017 | 1.9 |

It can be concluded that, owing to the proposed cogging torque minimization methods, the total output torque ripple was significantly reduced by about 33 %. For Motor C, the total output torque waveform more and more resembles that of the phase current with almost no reduction in average output torque.

The invention is not limited to the specific embodiments disclosed herein, but encompasses all variants, modifications and combinations thereof which fall into the scope of the appended claims.

**Claims**

1.  A brushless direct current motor (1), comprising:

    a rotor (2) with an axial direction (AD) and a plurality of alternating magnetic poles disposed around the axial direction (AD),
    a stator (3) disposed coaxially to the rotor (2) and having a stator coil (4) between a first and a second stator yoke (5, 6),
    each stator yoke (5, 6) having a stator base (8) for mounting an end of the stator coil (4) and, extending from the stator base (8), a plurality of stator claws (10, 11) whose end sections (13) form stator poles (14 - 17),
    the stator poles (14, 15) of the first stator yoke (5) meshing with the stator poles (16, 17) of the second stator yoke (6) and forming gaps (18) therebetween,
    **characterized in that** each stator pole (14 - 17) is slotted into at least two pole fingers (14a/b - 17a/b) and the pole fingers (14a/b - 17a/b) are skewed with respect to the axial direction (AD).

2.  The brushless direct current motor according to claim 1, **characterized in that** the pole fingers (14a/b - 17a/b) are of equal width, seen in the circumferential direction of the stator (3).

3.  The brushless direct current motor according to claim 1 or 2, **characterized in that** the skewing angle ($\xi_{\mathrm{skew}}$) of the pole fingers (14a/b - 17a/b) is in the range of 15° to 60°, preferably about 45°.

4.  The brushless direct current motor according to any one of the claims 1 to 3, **characterized in that** the width of all slots (19) and gaps (18) is the same.

5.  The brushless direct current motor according to any one of the claims 1 to 4, **characterized in that** the length of each slot (19) is equal to the axial length of the respective stator claw (10, 11).

6. The brushless direct current motor according to any one of the claims 1 to 5, **characterized in that** the length of each slot (19) is shorter than the axial length of the respective stator claw (10, 11).

7. The brushless direct current motor according to any one of the claims 1 to 6, **characterized in that** adjacent pole fingers (14a/b - 17a/b) of the same stator pole (14 - 17) are connected via a bridge (20).

8. The brushless direct current motor according to claim 7, **characterized in that** the bridge (20) lies at the end of the pole fingers (14a/b - 17a/b).

9. The brushless direct current motor according to any one of the claims 1 to 8, **characterized in that** there are two stator claws (10, 11) per stator yoke (5, 6).

10. The brushless direct current motor according to any one of the claims 1 to 9, **characterized in that** there are two pole fingers (14a/b - 17a/b) per stator pole (14 - 17).

11. The brushless direct current motor according to any one of the claims 1 to 10, **characterized in that** each stator yoke (5, 6) has been made by punching and bending or deep-drawing a metal plate or a laminated stack of metal sheets.

12. The brushless direct current motor according to any one of the claims 1 to 11, **characterized in that** each stator yoke (5, 6) has been made by sintering, preferably from a soft magnetic composite (SMC) material.

**Fig. 1a**

(State of the Art)

**Fig. 1b**

(State of the Art)

Fig. 2a    Fig. 2b    Fig. 2c

EP 3 576 267 A1

*Fig. 3*

*Fig. 4a*

*Fig. 4b*

*Fig. 4c*

*Fig. 4d*

$\varphi_m$ in mech. deg

*Fig. 5*

*Fig. 6*

*Fig. 7*

## Fig. 8

## Fig. 9

Europäisches
Patentamt

European
Patent Office

Office européen
des brevets

## EUROPEAN SEARCH REPORT

Application Number

EP 18 17 4826

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 753 927 A2 (MINEBEA CO LTD [JP]) 15 January 1997 (1997-01-15) * abstract * * claims 1-13 * * figures 1-9,13,14 * | 1-12 | INV. H02K21/22 H02K1/14 H02K1/27 H02K15/02 |
| X | US 2 901 645 A (SULGER HAROLD E) 25 August 1959 (1959-08-25) * abstract * * column 2, line 58 - column 4, line 41 * * figures 4-10 * | 1-5,7-12 | |
| X | EP 0 977 339 A2 (MINEBEA CO LTD [JP]) 2 February 2000 (2000-02-02) * abstract * * paragraph [0003] - paragraph [0009] * * paragraph [0026] - paragraph [0030] * * figures 1-8 * | 1-4,6-12 | |
| X | WO 2006/089578 A1 (EBM PAPST ST GEORGEN GMBH & CO [DE]; PEIA RODICA [DE]) 31 August 2006 (2006-08-31) * abstract * * page 6, line 25 - page 7, line 23 * * figures 1,5-10 * | 1-4,6-12 | TECHNICAL FIELDS SEARCHED (IPC) H02K |
| A | DE 10 2007 013738 A1 (MINEBEA CO LTD [JP]) 25 September 2008 (2008-09-25) * abstract * * paragraph [0009] - paragraph [0030] * * figures 1-6 * | 1-12 | |

The present search report has been drawn up for all claims

| Place of search | Date of completion of the search | Examiner |
|---|---|---|
| The Hague | 23 November 2018 | Molnar, Sabinus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 3 576 267 A1**

## ANNEX TO THE EUROPEAN SEARCH REPORT
## ON EUROPEAN PATENT APPLICATION NO.

EP 18 17 4826

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2018

| Patent document cited in search report | | Publication date | Patent family member(s) | | Publication date |
|---|---|---|---|---|---|
| EP 0753927 | A2 | 15-01-1997 | DE 69607076 D1 | | 20-04-2000 |
| | | | DE 69607076 T2 | | 14-12-2000 |
| | | | EP 0753927 A2 | | 15-01-1997 |
| | | | JP H0923635 A | | 21-01-1997 |
| | | | US 5818143 A | | 06-10-1998 |
| US 2901645 | A | 25-08-1959 | NONE | | |
| EP 0977339 | A2 | 02-02-2000 | DE 69924195 T2 | | 11-05-2006 |
| | | | EP 0977339 A2 | | 02-02-2000 |
| | | | JP 3461123 B2 | | 27-10-2003 |
| | | | JP 2000050536 A | | 18-02-2000 |
| | | | US 6201324 B1 | | 13-03-2001 |
| WO 2006089578 | A1 | 31-08-2006 | EP 1851441 A1 | | 07-11-2007 |
| | | | JP 4977039 B2 | | 18-07-2012 |
| | | | JP 2008532463 A | | 14-08-2008 |
| | | | US 2007134109 A1 | | 14-06-2007 |
| | | | WO 2006089578 A1 | | 31-08-2006 |
| DE 102007013738 | A1 | 25-09-2008 | DE 102007013738 A1 | | 25-09-2008 |
| | | | JP 2008237011 A | | 02-10-2008 |
| | | | US 2008231140 A1 | | 25-09-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4891567 A
- US 20020117932 A1

**Non-patent literature cited in the description**

- **W. H. YEADON ; A. W. YEADON.** Handbook of Small Electric Motors. McGraw-Hill, 2001
- **J.R. HENDERSHOT ; T.J.E. MILLER.** Basic Design Choices in Design of Brushless Permanent-Magnet Machines. Motor Design Books LLC, 2010, 107-108
- **N. BIANCHI ; S. BOLOGNANI.** Design techniques for reducing the cogging torque in surface-mounted PM motors. *IEEE Trans. Ind. Appl.,* September 2002, vol. 38 (5), 1259-1265
- **Z. Q. ZHU ; D. HOWE.** Influence of design parameters on cogging torque in permanent magnet machines. *IEEE Trans. Energy Convers.,* December 2000, vol. 15 (4), 407-412
- *Simulation Technology for Electromagnetical Design,* 27 January 2018, http://www.jmag-international.com